# EUROPÄISCHE PATENTSCHRIFT

(11) **EP 3 799 950 B1**
(45) Veröffentlichungstag und Bekanntmachung des Hinweises auf die Patenterteilung: **20.04.2022**
(21) Anmeldenummer: 20193344.7
(22) Anmeldetag: 28.08.2020
(51) Int. Cl.: B01D 65/02, B01D 67/00, B01D 69/08, D01D 5/24, D01D 10/06, B65H 57/14

(54) **VORRICHTUNG ZUM SPÜLEN UND IMPRÄGNIEREN EINER FILTERMEMBRANBAHN**
DEVICE FOR FLUSHING AND IMPREGNATING A FILTER MEMBRANE SHEET
DISPOSITIF DE RINÇAGE ET D'IMPRÉGNATION D'UNE BANDE DE MEMBRANE FILTRANTE

(30) Priorität: 30.09.2019 DE 102019126317
(43) Veröffentlichungstag der Anmeldung: 07.04.2021
(73) Patentinhaber: qCoat GmbH, 04277 Leipzig (DE)
(72) Erfinder: Schulze, Agnes, 04155 Leipzig (DE); Hinkefuß, Manfred, 04157 Leipzig (DE); Drößler, Lutz, 04347 Leipzig (DE)
(74) Vertreter: Findeisen Neumann Scheit Partnerschaft mbB

(56) Entgegenhaltungen:
- EP-A1- 2 583 745
- EP-A1- 2 633 900
- EP-A1- 2 703 068
- WO-A1-2014/104124
- WO-A1-2017/001260
- JP-A- H0 957 078
- US-A1- 2014 163 124

## Beschreibung

Die Erfindung betrifft eine Vorrichtung zum Spülen oder Imprägnieren einer Filtermembranbahn.

### Technologischer Hintergrund

Poröse Flachfiltermembranen haben in den letzten Jahren eine stetig wachsende Bedeutung für verschiedene Anwendungen, wie z. B. in der Hämodialyse, Trinkwasser- und Abwasser Aufreinigung, Sterilfiltration oder in der Getränkeproduktion erlangt. Die Vielzahl unterschiedlicher Anwendungen erfordert eine spezifische Anpassung der Polymermembranen, um Fouling zu reduzieren/zu verhindern, um katalytisch aktive Membranoberflächen zu generieren, oder um eine stabile und hohe Membranleistung zu erwirken.

Der Prozess der Modifizierung der Flachfiltermembran erfordert in der Regel auch eine Vor- und/oder Nachbehandlung der Membran, z. B. Imprägnieren oder Spülen mit Lösungsmittel-/Wasser-basierten Medien. Dazu wird das Membranmaterial von einer ersten Rolle auf eine zweite Rolle gezogen und durchläuft entsprechende Bäder (Rolle-zu-Rolle-Verfahren). Umlenkwalzen ermöglichen dabei eine Richtungsänderung und den Materialbahntransport von empfindlichen/dünnen/wenig stabilen Filtermaterialien auf einer kontinuierlichen Anlage. Die Umlenkwalzen können dafür wie eine Rolle um ihre Achse rotieren und damit eine Materialbahn (Membranbahn) durch ein Spül-/Imprägnierbad lenken. Um eine empfindliche Materialbahn zu transportieren, können diese Umlenkwalzen auch aktiv angetrieben werden. Somit können Flachfiltermembranen mit möglichst niedriger Zugspannung über die gesamte Anlage gezogen werden.

Das Imprägnieren oder Spülen der porösen Flachfiltermembranen erfordert lange Verweilzeiten in den Bädern, um den Stoffaustausch im porösen Material während des passiven Durchziehens durch das Bad zu erreichen. Dazu werden die Materialbahnen entsprechend durch sehr lange Bäder mit großen Volumina gezogen, um die Poren möglichst vollständig zu imprägnieren/spülen. Im Falle einer Bahnbreite von ca. 40 cm und einer Membrandicke von 150 µm wären beispielsweise Verweilzeiten von 5 - 20 Minuten in einem Bad von ca. 200 - 400 L Volumen nötig, wenn man von einer recht langsamen Prozess-Geschwindigkeit von 1 m/min ausgeht (bei höheren Geschwindigkeiten benötigt man entsprechend größere Volumina, um die Verweilzeit zu realisieren). Am Beispiel einer Anlage mit vier Bädern bedeutet dies eine Verweilzeit von 20 - 80 Minuten in Volumina von 800 - 1.600 L mit entsprechend kostenintensivem Einsatz von Chemikalien und anschließender Entsorgung sowie viel Platz für die entsprechenden Tanks.

Da das Membranmaterial nur passiv durch die Bäder gezogen wird, ist der Stoffaustausch nie vollständig und beim Entfernen von toxischen Chemikalienresten müssen mehrere Bäder hintereinander durchfahren werden, um möglichst effizient zu spülen. Trotzdem sind in kommerziellen Membranen nach wie vor Chemikalienrückstände nachweisbar, welche hochproblematisch in medizinischen Produkten oder Nahrungsmitteln sind.

Außerdem erzeugen bewegliche Umlenkrollen im Prozess auf Dauer immer Abrieb und der Eintrag von Schmiermitteln in das System (also auf das Membranmaterial) kann nicht vollständig ausgeschlossen werden. EP 2 633 900 A1, WO 2017/001260 A1 und US 2014/163124 A1 offenbaren Vorrichtungen zum Waschen von Hohlfasermembranen mit Umlenkrollen.

### Zusammenfassung der Erfindung

Ein oder mehrere Nachteile des Standes der Technik werden mit Hilfe der Vorrichtung nach Anspruch 1 gelöst oder zumindest gemindert. Hierzu umfasst die erfindungsgemäße Vorrichtung zum Spülen oder Imprägnieren einer Filtermembranbahn:
- einen Hohlzylinder mit poröser Zylinderwand,
- Mittel zum Führen der Filtermembranbahn über die Zylinderwand des Hohlzylinders, die eine erste Umlenkwalze und eine zweite Umlenkwalze umfassen, wobei der Hohlzylinder derart zwischen der ersten Umlenkwalze und der zweiten Umlenkwalze angeordnet ist, dass die Filtermembranbahn am Hohlzylinder umlenkbar ist, und
- eine Pumpvorrichtung, die an einen Zulaufanschluss am Hohlzylinder angeschlossen ist und dazu ausgelegt ist eine Flüssigkeit in den Hohlzylinder und durch die Poren der Zylinderwand zu leiten.

Die Vorrichtung ist somit derart ausgelegt, dass eine von der Pumpvorrichtung geförderte Flüssigkeit in den Hohlzylinder gepumpt wird und durch die Poren der Zylinderwand wieder aus dem Hohlzylinder austritt. Auf der Oberfläche des Hohlzylinders bildet sich in der Folge ein dünner Flüssigkeitsfilm, an dem die Filtermembranbahn umgelenkt und dabei von der Flüssigkeit durchströmt wird. Die erfindungsgemäße Vorrichtung ermöglicht somit ein aktives Durchspülen der Filtermembranbahn und vermeidet zudem den direkten Kontakt zwischen der Zylinderwand und der Filtermembranbahn durch die Ausbildung dieses dünnen Flüssigkeitsfilms auf der Zylinderwandoberfläche, auf welchem die Materialbahn gleitet. Somit können insbesondere auch empfindliche Filtermembranbahnen durch eine kontinuierliche Bandanalage geführt und gleichzeitig aktiv gespült oder imprägniert werden.

Die erfindungsgemäße Vorrichtung ermöglicht zudem eine erheblich reduzierte Prozesszeit sowie eine Reduktion an Chemikalien und Lösungsmitteln für den Spül- oder Imprägnierprozess, da unter anderem deutlich kleinere Spülbäder verwendet werden können.

Bei herkömmlichen Anlagen zum Spülen oder Imprägnieren von Flachfiltermembranen entsteht durch den Einsatz einer beweglichen Umlenkrolle immer Abrieb und es kann zu einem Eintrag von Schmiermittel ins System kommen, was zur Kontaminierung der Membranen führen kann. Das kann mit der erfindungsgemäßen Vorrichtung vermieden werden.

Nach einer Ausführungsform umfasst die Vorrichtung eine Abdeckkappe zur Versiegelung eines der Filtermembranbahn abgewandten Teils der Zylinderwand.

Gemäß einer weiteren Ausführungsform ist vorgesehen, dass die Vorrichtung einen Spülbehälter umfasst und der Hohlzylinder in dem Spülbehälter angeordnet ist. Der Hohlzylinder kann im Spülbehälter lösbar montiert sein.

Nach einer weiteren Ausführungsform ist vorgesehen, dass die Vorrichtung einen nach oben stehenden Griff umfasst, der am Hohlzylinder montiert ist.

Die Zylinderwand des Hohlzylinders ist vorzugsweise aus einem Material ausgewählt aus Kunststoffen (insbesondere Polyethylen, Polypropylen, Polytetrafluoroethylen, Polyvinylidenfluorid, Ethylvinylacetat, Polycarbonat, Polyamid, thermoplastisches Polyester-Polyurethan, oder Polyethersulfon), Metallen (insbesondere Sinteredelstahl oder Sinterbronze), Keramiken (insbesondere Aluminiumoxid, Aluminiumtitanat, Zirkonoxid, Aluminiumnitrid, Siliziumcarbid, Siliziumnitrid) oder Verbundstoffen daraus geformt.

Die Pumpvorrichtung ist vorzugsweise regelbar.

Alle weiteren Ausführungsformen und Spezifikationen können der detaillierten Beschreibung und den nachfolgend beschrieben Figuren entnommen werden.

### Kurzbeschreibung der Figuren

Die Erfindung wird nachfolgend anhand eines Ausführungsbeispiels und dazugehöriger Zeichnungen näher erläutert. Die Figuren zeigen:
- Fig. 1: eine Vorrichtung zum Spülen oder Imprägnieren einer Filtermembranbahn gemäß einer Ausführungsform der Erfindung;
- Fig. 2: einen Querschnitt durch die Vorrichtung aus Figur 1;
- Fig. 3: eine Detailansicht eines Hohlzylinders, der in der in Figur 1 dargestellten Vorrichtung eingesetzt wird;
- Fig. 4: einen Längsschnitt durch den Hohlzylinder aus Figur 3; und
- Fig. 5: einen schematischen Querschnitt durch den Hohlzylinder aus Figur 3 während des Spülvorgangs.

### Detaillierte Beschreibung der Erfindung

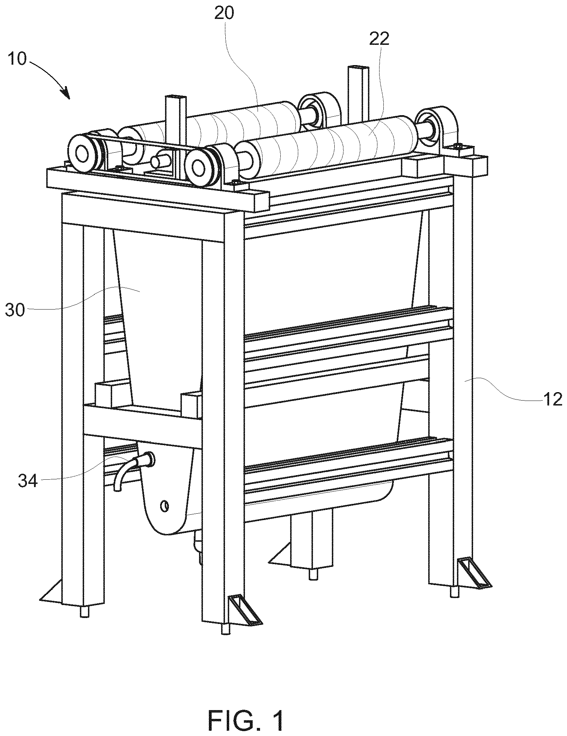

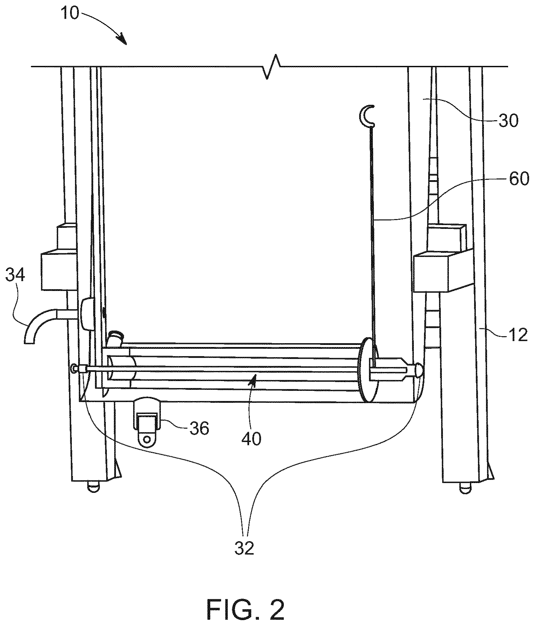

Die Figuren 1 und 2 zeigen eine Vorrichtung 10 zum Spülen oder Imprägnieren einer Filtermembranbahn gemäß einer Ausführungsform der Erfindung. Die Vorrichtung 10 kann Teil einer komplexen Fertigungsanlage für Filtermembranen sein und als Modul in eine solche integriert werden.

Die hier exemplarisch dargestellte Vorrichtung 10 weist Mittel zum Führen einer Filtermembranbahn auf. Diese Mittel umfassen eine erste Umlenkwalze 20 und eine zweite Umlenkwalze 22, die in einem oberen Bereich eines Gestells 12 der Vorrichtung 10 rotierbar montiert sind und der Umlenkung der Filtermembranbahn in einen weiter unten montierten Spülbehälter 30 dienen. Die Rotation der Umlenkwalzen 20, 22 kann aktiv oder passiv erfolgen. Im ersteren Fall können die Umlenkwalzen 20, 22 an eine Antriebseinheit angeschlossen (z. B. einen Elektromotor) oder mit einer Handkurbel bedient werden. Im passiven Betrieb ist die Vorrichtung 10 Teil einer Fertigungsanlage, die Mittel zur Bewegung der Filtermembranbahn umfasst.

Der Spülbehälter 30 ist ebenfalls am Gestell 12 der Vorrichtung 10 befestigt und beispielweise aus Edelstahl bestehen. In der in den Figuren 1 und 2 dargestellten Ausführungsform ist der Spülbehälter 30 als eine tiefgezogene Wanne ausgeführt. Ein im Folgenden noch näher erläuterter Hohlzylinder 40 ist über eine Zentrieraufnahme 32 im Bodenbereich des Spülbehälters 30 im Betrieb feststehend, d. h. nicht rotierend, aber wieder lösbar montiert. Der Spülbehälter 30 umfasst ferner einen Überlauf 34, der sich oberhalb des Hohlzylinders 40 befindet, und einen Ablauf 36 am Boden des Spülbehälters 30.

In der dargestellten Ausführungsform der Figur 2 ist am Hohlzylinder 40 ein Griff 60 befestigt. Der Griff 60 soll das Einfädeln der Filtermembranbahn und die Montage des Hohlzylinders 40 an der Zentrieraufnahme 32 erleichtern.

Die reversible Montage des Hohlzylinders 40 erleichtert das Einfädeln der Filtermembranbahn 100 in die Vorrichtung 10 sowie die Wartung der Vorrichtung 10, insbesondere des Hohlzylinders 40. Der Hohlzylinder 40 ist derart montiert, dass der Hohlzylinder 40 nicht um seine eigene Achse rotiert. Das Umlenken der Filtermembranbahn 100 am Hohlzylinder 40 basiert auf der Ausbildung eines Flüssigkeitsfilms auf der Zylinderwandoberfläche und setzt daher keine freie Drehlagerung des Hohlzylinders 10 voraus. Dies hat den Vorteil, dass Abrieb des Filtermembranmaterials sowie die Kontamination der Filtermembranbahn durch Schmiermittel im Umlenkbereich vermieden werden kann.

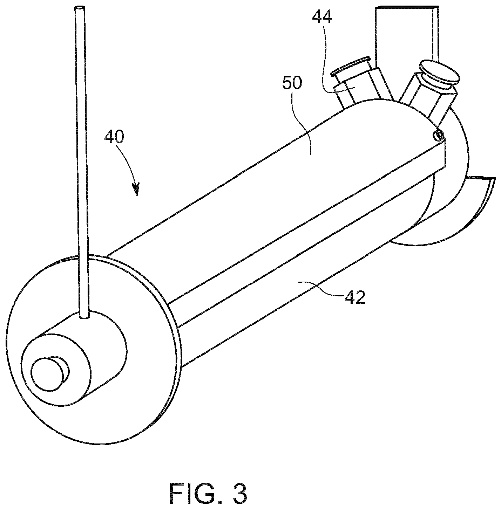

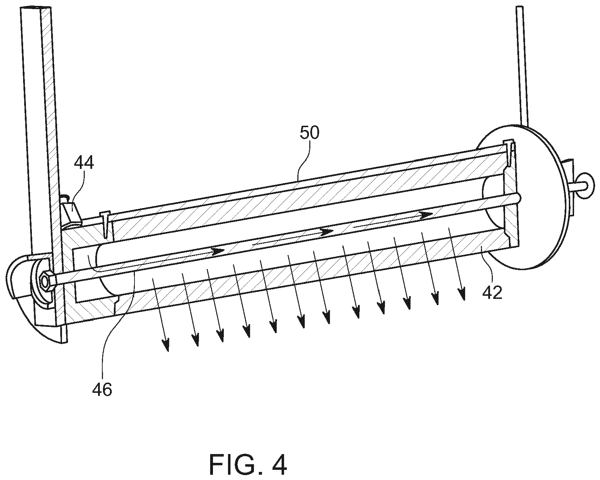

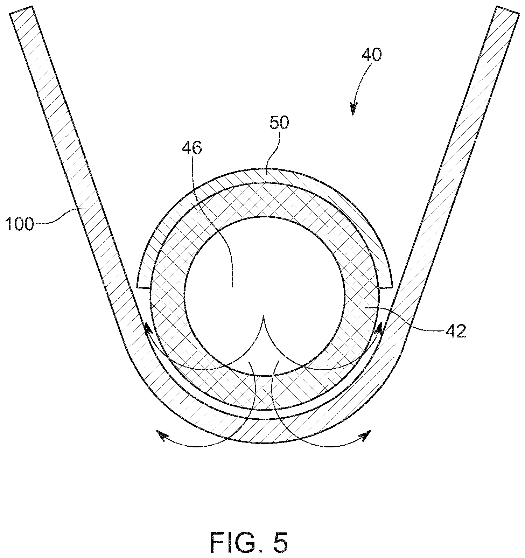

Den Figuren 3 bis 5 ist der Hohlzylinder 40 der hier dargestellten Ausführungsform der Vorrichtung 10 zu entnehmen. Der Hohlzylinder 10 ist so zwischen der ersten Umlenkwalze 20 und der zweiten Umlenkwalze 22 angeordnet, dass die Filtermembranbahn 100 am Hohlzylinder 40 umgelenkt wird, wenn sich der Hohlzylinder 40 in der Zentrieraufnahme 32 befindet. Der Hohlzylinder 40 weist eine poröse Zylinderwand 42 auf. Über einen Zulaufanschluss 44 an einem Ende des Hohlzylinders 40 kann eine Flüssigkeit in einen Innenraum 46 des Hohlzylinders 40 gespeist werden. Durch die Poren der Zylinderwand 42 kann die in den Innenraum 46 geleitete Flüssigkeit dann wieder austreten, was durch die Pfeile in den Figuren 4 und 5 angedeutet wird. Zur Versiegelung eines der Filtermembranbahn 100 abgewandten Teils der porösen Zylinderwand 42 dient eine Abdeckkappe 50.

Die poröse Zylinderwand 42 des Hohlzylinders 40 kann beispielsweise aus Kunststoffen wie Polyethylen, Polypropylen, Polytetrafluoroethylen, Polyvinylidenfluorid, Ethylvinylacetat, Polycarbonat, Polyamid, thermoplastisches Polyester-Polyurethan, Polyethersulfon, Metallen wie Sinteredelstahl, Sinterbronze, Keramiken wie Aluminiumoxid, Aluminiumtitanat, Zirkonoxid, Aluminiumnitrid, Siliziumcarbid, Siliziumnitrid, oder Verbundstoffen daraus bestehen.

Eine regel- oder steuerbare Pumpvorrichtung für die Flüssigkeit (hier nicht näher dargestellt), ist am Zulaufanschluss 44 angeschlossen. Die Menge der durch die poröse Zylinderwand 42 strömenden Flüssigkeit kann auf diese Weise durch Vorgabe einer Pumpleistung der Pumpvorrichtung vorgegeben werden. Der Hohlzylinder 40 wird also aktiv mit der Flüssigkeit (z. B. Wasser) durchspült. Dadurch wird die über die Zylinderwand 42 des Hohlzylinders 40 geführte Filtermembranbahn 100 aktiv durchspült/getränkt. Gleichzeitig bildet sich ein Film aus dem Spülmedium auf der porösen Zylinderwand 42 des Hohlzylinders 40 aus, auf dem die Filtermembranbahn 100 während der Führung gleitet und ermöglicht somit einen berührungsfreien Bahnlauf. Damit die um den Hohlzylinder 40 zu führende Filtermembranbahn 100 über einen sich ausbildenden Flüssigkeitsfilm gleiten kann, ist die der Filtermembranbahn 100 abgewandte obere Seite des Hohlzylinders 40 mit der dichten Abdeckkappe 50 versiegelt. So baut sich ein gleichmäßiger Flüssigkeitsfilm auf der Unterseite des Hohlzylinders 40 auf und lässt die Filtermembranbahn 100 berührungsfrei über den Hohlzylinder 40 gleiten. Gleichzeitig wird die Flüssigkeit aktiv durch die Filtermembranbahn 100 gespült.

Die Vorrichtung 10 ermöglicht somit die berührungslose Umlenkung der Filtermembranbahn 100 im Rolle-zu-Rolle-Prozess auf einem feststehenden porösen Hohlzylinder 40 und ermöglicht gleichzeitig ein aktives Durchspülen der Filtermembranbahn 100, um diese entweder zu reinigen oder zu imprägnieren. Das benötigte Volumen sowie die notwendige Kontaktzeit zum Spülen/Imprägnieren sind gegenüber herkömmlichen Verfahren erheblich reduziert. Das aktive Durchspülen ist zudem wesentlich effektiver als das bisher übliche passive Durchziehen durch ein Bad. Die berührungslose Umlenkung ermöglicht weiterhin eine schonende Führung von sehr empfindlichen/dünnen/wenig stabilen Filtermaterialien ohne aktiven Antrieb einer Umlenkrolle. Herkömmliche Anlagen nutzen keine porösen, aktiven Umlenksysteme, sondern beispielsweise aktiv angetriebene Rollen zum schonenden Mitführen von Bahnmaterialien. Zusätzlich sind dann erheblich längere Verweilzeiten (5 - 10x) in den entsprechenden Spül-/Imprägnierbädern mit dadurch bedingt größeren Volumina (5 - 10x) erforderlich, um brauchbare Resultate zu erzielen.

## Patentansprüche

1. Vorrichtung (10) zum Spülen oder Imprägnieren einer Filtermembranbahn (100), umfassend
- einen Hohlzylinder (40) mit poröser Zylinderwand (42);
- Mittel zum Führen der Filtermembranbahn (100) über die Zylinderwand (42) des Hohlzylinders (40), die eine erste Umlenkwalze (20) und eine zweite Umlenkwalze (22) umfassen, wobei der Hohlzylinder (40) derart zwischen der ersten Umlenkwalze (20) und der zweiten Umlenkwalze (22) angeordnet ist, dass die Filtermembranbahn (100) am Hohlzylinder (40) umlenkbar ist; und
- eine Pumpvorrichtung, die an einen Zulaufanschluss (44) am Hohlzylinder (40) angeschlossen ist und dazu ausgelegt ist eine Flüssigkeit in den Hohlzylinder (40) und durch die Poren der Zylinderwand (42) zu leiten.

2. Vorrichtung nach Anspruch 1, umfassend eine Abdeckkappe (50) zur Versiegelung eines der Filtermembranbahn (100) abgewandten Teils der Zylinderwand (42).

3. Vorrichtung nach einem der vorherigen Ansprüche, wobei die Vorrichtung einen Spülbehälter (30) umfasst und wobei der Hohlzylinder (40) in dem Spülbehälter (30) angeordnet ist.

4. Vorrichtung nach Anspruch 3, wobei der Hohlzylinder (40) im Spülbehälter (30) lösbar montiert ist.

5. Vorrichtung nach einem der vorherigen Ansprüche, umfassend einen nach oben stehenden Griff (60), der am Hohlzylinder (40) montiert ist.

6. Vorrichtung nach einem der vorherigen Ansprüche, wobei die Zylinderwand (42) des Hohlzylinders (40) aus einem Material ausgewählt aus Kunststoffen, Metallen, Keramiken oder Verbundstoffen daraus geformt ist.

7. Vorrichtung nach einem der vorherigen Ansprüche, wobei die Pumpvorrichtung regelbar ist.

## Claims

1. A device (10) for washing or impregnating a strip of filter membrane (100) comprising
- a hollow cylinder (40) with a porous cylinder wall (42);
- a means of guiding the strip of filter membrane (100) over the cylinder wall (42) of the hollow cylinder (40) that comprises a first deflection roller (20) and a second deflection roller (22), and where the hollow cylinder (40) is arranged between the first deflection roller (20) and the second deflection roller (22) such that the strip of filter membrane (100) can be deflected on the hollow cylinder (40); and
- a pumping device connected to a feed connection (44) on the hollow cylinder (40) and designed to conduct a fluid into the hollow cylinder (40) and through the pores of the cylinder wall (42).

2. A device according to claim 1 comprising a cover cap (50) for sealing a part of the cylinder wall (42) that faces away from the strip of filter membrane (100).

3. A device according to one of the preceding claims, wherein the device comprises a washing vessel (30) and wherein the hollow cylinder (40) is arranged in the washing vessel (30).

4. A device according to claim 3, wherein the hollow cylinder (40) is detachably mounted in the washing vessel (30).

5. A device according to one of the preceding claims comprising an upright handle (60) that is mounted on the hollow cylinder (40).

6. A device according to one of the preceding claims, wherein the cylinder wall (42) of the hollow cylinder (40) is formed from a material selected from plastics, metals, ceramics or composites thereof.

7. A device according to one of the preceding claims, whereby the pumping device can be regulated.

## Revendications

1. Dispositif (10) pour rincer ou imprégner une bande de membrane filtrante (100), comprenant
- un cylindre creux (40) avec une paroi cylindrique poreuse (42) ;
- des dispositifs pour guider la bande de membrane filtrante (100) sur la paroi cylindrique (42) du cylindre creux (40), lesquels dispositifs comprennent un premier rouleau de déviation (20) et un second rouleau de déviation (22), le cylindre creux (40) étant disposé entre le premier rouleau de déviation (20) et le second rouleau de déviation (22) de sorte que la bande de membrane filtrante (100) peut être déviée sur le cylindre creux (40) ; et
- un dispositif de pompage qui est relié à un raccordement d'entrée (44) sur le cylindre creux (40) et qui est conçu pour envoyer un fluide dans le cylindre creux (40) et à travers les pores de la paroi cylindrique (42).

2. Dispositif selon la revendication 1, comprenant un couvercle (50) rendant étanche une partie de la paroi cylindrique (42) située à l'opposé de la bande de membrane filtrante (100).

3. Dispositif selon l'une des revendications précédentes, dans lequel le dispositif comprend une cuve de rinçage (30), le cylindre creux (40) étant disposé dans la cuve de rinçage (30).

4. Dispositif selon la revendication 3, dans lequel le cylindre creux (40) est monté de manière amovible dans la cuve de rinçage (30).

5. Dispositif selon l'une des revendications précédentes, comprenant une poignée verticale (60) montée sur le cylindre creux (40).

6. Dispositif selon l'une des revendications précédentes, dans lequel la paroi cylindrique (42) du cylindre creux (40) est formée dans un matériau sélectionné parmi des matières plastiques, des métaux, des céramiques ou des composites issus de ceux-ci.

7. Dispositif selon l'une des revendications précédentes, dans lequel le dispositif de pompage peut être ajusté.
